**Europäisches Patentamt**

**European Patent Office**

**Office européen des brevets**

(19)

(11) Veröffentlichungsnummer : **0 478 720 B1**

## (12) EUROPÄISCHE PATENTSCHRIFT

(45) Veröffentlichungstag der Patentschrift :
**11.01.95 Patentblatt 95/02**

(51) Int. Cl.$^6$ : **G01N 27/40,** G01N 27/419

(21) Anmeldenummer : **91903880.2**

(22) Anmeldetag : **27.02.91**

(86) Internationale Anmeldenummer :
**PCT/CH91/00046**

(87) Internationale Veröffentlichungsnummer :
**WO 91/16623 31.10.91 Gazette 91/25**

(54) MESSONDE FÜR DIE AMPEROMETRISCHE BESTIMMUNG VON IN EINEM MESSMEDIUM ENTHALTENEN GASEN UND/ODER NICHT-IONISCHEN VERBINDUNGEN.

(30) Priorität : **24.04.90 CH 1383/90**

(43) Veröffentlichungstag der Anmeldung :
**08.04.92 Patentblatt 92/15**

(45) Bekanntmachung des Hinweises auf die
Patenterteilung :
**11.01.95 Patentblatt 95/02**

(84) Benannte Vertragsstaaten :
**BE CH DE DK FR GB LI**

(56) Entgegenhaltungen :
**EP-A- 113 966**

(56) Entgegenhaltungen :
**GB-A- 2 178 540**
**GB-A- 2 218 525**
**US-A- 3 718 562**
**US-A- 4 252 627**

(73) Patentinhaber : **Mettler-Toledo AG**
**Im Langacher**
**CH-8606 Greifensee (CH)**

(72) Erfinder : **MÜLLER, Jörg**
**Wehntalerstrasse 48**
**CH-8057 Zürich (CH)**
Erfinder : **HEBER, Urs**
**Steinmürlistrasse 55**
**CH-8953 Dietikon (CH)**

## Beschreibung

Die, Erfindung betrifft eine Messonde für die amperometrische Bestimmung von in einem Messmedium enthaltenen Gasen und/oder nicht-ionischen Verbindungen gemäss Oberbegriff des Anspruchs 1 sowie die Verwendung der Messonde zur amperometrischen Bestimmung von Sauerstoff in Gasgemischen oder Flüssigkeiten gemäss Anspruch 11 und die Verwendung zur amperometrischen Bestimmung von Chlor oder Wasserstoff in Gasgemischen oder Flüssigkeiten gemäss Anspruch 12.

Für die Ueberwachung biologischer und biochemischer Prozesse sowie in der Getränkeindustrie und im Brauereiwesen werden in zunehmendem Masse membranbedeckte Messonden, insbesondere amperometrische Sensoren, für die Bestimmung von in einem Messmedium enthaltenen Gasen und/oder nicht-ionischen Verbindungen, z.B. flüchtigen Bestandteilen des Messmediums oder Gasen, insbesondere Sauerstoff, eingesetzt. Um eine optimale Funktion derartiger Messonden, z.B. kurze Ansprechzeit, hohe Empfindlichkeit, tiefe Nachweisgrenze und gute Langzeitstabilität, zu erreichen, ist es notwendig, dafür Sorge zu tragen, dass beispielsweise durch Temperaturschwankungen hervorgerufene Druckdifferenzen zwischen dem Messmedium und dem Innenraum der Messonde, welcher die sensitiven Teile der Messonde umgibt, weitgehend vermieden oder kompensiert werden. Vorallem ist es notwendig, dass derartige Messonden dampfsterilisierbar sind, so dass die während der Dampfsterilisation auftretenden Druckdifferenzen, die Funktion der Messonde nicht beeinflussen, d.h. es sind Massnahmen zu treffen, durch die eine Verformung der Membran infolge von hohen Druckdifferenzen zwischen dem Messmedium und dem Sondeninnenraum verhindert werden. Bei Messonden mit einer unverstärkten gaspermeablen Membran, z.B. der in der US-PS 2 913 386 beschriebenen, lässt sich eine ausreichende Druckstabilität nur mit grossem apparativen Aufwand erreichen. Um der unerwünschten Verformung der Membran entgegenzuwirken, wurden verschiedene Wege eingeschlagen und die nachfolgenden Massnahmen ergriffen:

a) Druckausgleich durch geeignete Vorrichtungen;
b) Aufrechterhaltung eines Druckgefälles vom Messmedium Richtung des Innenraumes der Messonde;
c) Verstärkung der Membran.

Der unter a) erwähnte Druckausgleich wird beispielsweise bei der in der US-PS 4 252 627 beschriebenen Sauerstoffelektrode, die einen mit Elektrolyt gefüllten Innenraum aufweist, in der Weise erreicht, dass das Sondengehäuse mit einem Luftspalt versehen ist, über den der Sondeninnenraum mit dem Messmedium kommunizieren kann. Auf diese Weise kann ein rascher und exakter Druckausgleich erreicht werden; es besteht jedoch die Gefahr, dass flüchtige Verbindungen aus dem Messmedium ungehindert in den Sondeninnenraum eindringen können. Dadurch kann es zu einer Veränderung der Zusammensetzung des Elektrolyten oder, falls kein Elektrolyt vorhanden ist, zu einer Veränderung der im Sondeninnenraum vorhandenen Gasphase kommen, woraus in beiden Fällen Messfehler resultieren können.

Der unter a) erwähnte Druckausgleich kann auch durch Verwendung einer flexiblen Membran oder mit Hilfe eines Flüssigkeitstropfens, wie in der US-PS 4 455 213 beschrieben, oder mittels eines im Sondengehäuse beweglichen Kolbens bewerkstelligt werden. Ausserdem kann der Druckausgleich mit Hilfe eines Ventils, welches sich bei einem bestimmten Ueberdruck im Sondeninnenraum öffnet, erreicht werden. Auf diese Weise kann der Innendruck in gewissen Grenzen gehalten werden, die Anbringung eines Ventils verursacht aber einen erheblichen apparativen Aufwand und wirkt ausserdem einer Miniaturisierung der Sonde, die für zahlreiche Anwendungen erwünscht ist, entgegen.

Die Einstellung eines Druckgefälles, wie unter b) erwähnt, kann beispielsweise dadurch erreicht werden, dass der Sondeninnenraum gegen die Atmosphäre offen ist und so die Membran durch den Druck des Messmediums gegen eine Unterlage gepresst wird. Sie erleidet dann kaum eine Verformung, wenn die zur Aufrechterhaltung eines Elektrolytfilmes notwendige Rauhigkeit der Unterlage nicht zu gross gewählt wird und der Druck einen gewissen maximalen Wert nicht überschreitet. Bei Sonden, bei denen der Innenraum mit Gas gefüllt ist, ist eine befriedigende Funktion nur dann gegeben, wenn durch das Eindringen von Atmosphärilien keine Beeinflussung der Messung verursacht wird.

Aus den obenstehenden Ausführungen ist ersichtlich, dass eine ausreichende Druckstabilität und damit die Verhinderung einer unerwünschten Verformung der Membran mittels der unter a) und b) aufgeführten Massnahmen nur mit erheblichem apparativem Aufwand erreicht werden kann. Dies gilt für alle mit einer einfachen, unverstärkten gaspermeablen Membran ausgestatteten Messonden.

Weniger Aufwand erfordert die unter c) erwähnte Verstärkung der Membran. Die Verstärkung kann beispielsweise durch Einbetten eines Stützmaterials, z.B. eines Netzes oder einer Lochplatte aus einem robusten Material, z.B. rostfreier Stahl, erreicht werden, wie aus der US-PS 3 718 562 bekannt ist. Diese US-PS betrifft eine Elektrodenanordnung mit einer Membran aus einem selektiv permeablen Material, z.B. Silikonkautschuk, in die ein poröses Gewebe als Verstärkung eingebettet ist. Als Verstärkungsmaterial wird dabei bevorzugt ein Netz aus einem organischen polymeren Material oder ein Stahlnetz verwendet. Derartige Membranen sind, insbesondere, wenn sie aus Silikonkautschuk gebildet sind, chemisch nicht resistent, vorallem nicht gegenüber agressiven Reinigungsmitteln, und verschmutzen leicht, z.B. durch Bakterienbewuchs bei Verwendung in biologischen oder biochemischen Prozessen, wodurch der Zutritt der zu bestimmenden Gase oder flüchtigen Verbindungen zu den im Sondeninnenraum untergebrachten sensitiven Teilen der Messonde behindert wird. Wird anstelle einer Membran aus Silikonkautschuk, die sich durch eine hohe Permeabiltät auszeichnet, eine Membran aus einem fluorierten Kohlenwasserstoff, z.B. Polytetrafluorethylen (PTFE) "Teflon" verwendet, so zeichnet sich diese zwar durch eine sehr gute chemische Resistenz aus, hat aber den Nachteil, dass ihre Permeabilität für die zu bestimmenden Gase um etwa zwei Zehnerpotenzen niedriger ist als diejenige von Silikonkautschuk.

Aus der US-PS 3 718 563 ist eine polarographische Messonde mit einer aus zwei Schichten aufgebauten Membran bekannt, bei der die mediumseitig angeordnete erste Schicht aus einem Material gebildet ist, das eine Permeabilitiät aufweist, die derjenigen von Silikonkautschuk annähernd gleich ist, während die zweite, dem Sondeninnenraum zugewandte Schicht aus einem hydrophoben Material gebildet ist, dessen Permeabiltät für Gase und Wasserdampf wesentlich geringer ist als diejenige der ersten Schicht. Die Schichten sind dabei nicht miteinander verbunden; sie sind jedoch derart im Sondengehäuse fixiert, dass ein Eindringen von Elektrolytlösung und/oder zu bestimmenden Gasen in den Zwischenraum zwischen den Schichten unterbunden wird. Durch diesen Aufbau der Membran wird erreicht, dass das zu bestimmende Gas, das an der Kathode verbraucht wird, wesentlich rascher nachgeliefert wird, als dies bei aus einer Schicht gebildeten Membran, einer sogenannten Einfachmembran, der Fall ist. Auf diese Weise wird mit dieser aus zwei Schichten gebildeten Membran auch über längere Zeiträume hinweg eine Verarmung an dem zu bestimmenden Gas, auch ohne Rühren, vermieden, woraus exakte Messergebnisse und eine kurze Ansprechzeit der mit dieser Membran ausgestatteten Messonde resultieren. Nachteilig wirkt sich dabei jedoch aus, dass die mediumseitig angeordnete erste Schicht aufgrund ihrer Materialeigenschaften chemisch wenig resistent ist und, im Fall der Verwendung in biologischen oder biochemischen Prozessen, leicht durch Bakterienbewuchs verschmutzt werden kann.

Um die im Vorhergehenden erwähnten Nachteile zu vermeiden, wurde in der CH-PS 677151 (Patentgesuch Nr. 02 503/88-9, veröffentlicht am 15.04.91) vorgeschlagen, eine Membran aus zwei Schichten herzustellen, wobei die mediumseitig angeordnete Schicht aus einem chemisch resistenten Material gebildet und gegenüber dem Bewuchs durch Bakterien unempfindlich ist, und in die andere Schicht, die aus einem Material gebildet ist, das eine im Vergleich zum Material der ersten Schicht erhöhte Permeabilität aufweist, ein Stützmaterial zu intergrieren. Die mit dieser Membran ausgestattete Messonde zeichnet sich gegenüber den vorgenannten hinsichtlich ihrer chemischen Resistenz, ihrer Unempfindlichkeit gegenüber der Verschmutzung durch Bakterienbewuchs und der Stabilität der Membran in vorteilhafter Weise aus; sie ist jedoch gegenüber grösseren Druckdifferenzen zwischen dem Messmedium und dem Sondeninnenraum nicht ausreichend unempfindlich für Verwendungen, die eine Dampfsterilisation der Messonde erfordern.

Aufgabe der Erfindung ist es daher, eine Messonde zur Bestimmung von in einem flüssigen oder gasförmigen Messmedium enthaltenen Gasen und/oder nicht-ionischen Verbindungen zu schaffen, die gegenüber Druckdifferenzen zwischen dem Messmedium und dem Sondeninnenraum, wie sie durch Temperaturschwankungen, insbesondere im Verlauf der Dampfsterilisation, hervorgerufen werden, auch im Bereich > 10 bar unempfindlich und ausserdem chemisch resistent und schmutzabweisend ist.

Die gestellte Aufgabe wird erfindungsgemäss durch die im kennzeichnenden Teil des Anspruchs 1 definierte Messonde gelöst.

Durch die Kombination einer aus mindestens drei Schichten gebildeten Membran, wobei die mittlere Schicht, die aus einem Material gebildet ist, das eine im Vergleich zum Material der beiden äusseren Schichten stark erhöhte Permeabilität für die zu bestimmenden Gase und/oder nicht-ionischen Verbindungen, nachfolgend aus Gründen der Einfachheit als Messgut bezeichnet, aufweist, und die beiden aussen liegenden Schichten chemisch resistent und schmutzabweisend sind, mit einem in das Sondengehäuse integrierten Druckausgleichssystem wird erreicht, dass eine Verformung der Membran - auch bei Druckdifferenzen zwischen dem Messmedium und dem Sondeninnenraum von annähernd 20 bar - praktisch vollkommen vermieden wird, die Nachlieferung von an der Kathode verbrauchtem Messgut, ohne besondere Vorkehrungen oder apparativen Aufwand, sichergestellt ist, so dass es nicht zu einer Verarmung an Messgut im Sondeninnenraum kommt, und eine Beschädigung der Membran durch den Angriff von agressiven Chemikalien oder ihre Verschmutzung durch Bakterienbewuchs verhindert wird.

Bevorzugte Ausbildungen der Messonde der eingangs erwähnten Art sind in den Ansprüchen 2 bis 10 umschrieben.

Durch die Ausbildung nach Anspruch 2 wird ein gegenseitiges Ablösen der Schichten untereinander vermieden und eine besonders gute Stabilität der Membran gewährleistet.

Durch die Wahl des Materials für die erste und die dritte Schicht entsprechend der Ausbildung nach Anspruch 3 und deren Kombination mit der zweiten Schicht entsprechend der Ausbildung nach Anspruch 4 wird einerseits eine hohe chemische Resistenz der mit dem Messmedium im Betriebszustand in Berührung kommenden Membranoberfläche und andererseits eine ausreichende Nachlieferung des Messgutes aufgrund der Permeabilitätsunterschiede zwischen den für die erste und die zweite Schicht gewählten Materialien sichergestellt, so dass es auch bei längerer Messdauer zu keiner Verarmung des Messgutes im Sondeninnenraum kommt und so eine Verfälschung der Messergebnisse auszuschliessen ist.

Durch die Integrierung eines Stützmaterials in die mittlere zweite Schicht entsprechend der Ausbildung nach Anspruch 5 wird eine besonders gute Formstabilität der Membran erreicht, wobei ein Netz aus rostfreiem Stahl besonders bevorzugt ist.

Die starre Fixierung der Membran und ihre Abdichtung im Sondengehäuse entsprechend der Ausbildung nach Anspruch 6 bewirkt, dass im Betriebszustand der Messonde der Austausch der zu bestimmenden Gase und/oder nicht-ionischen Verbindungen ausschliesslich über die Membran erfolgt und alle anderen Bereiche der Messonde gegenüber dem Messmedium und der Umgebung hermetisch abgeschlossen sind, so dass ein Eindringen von Verunreinigungen, z.B. im Messmedium enthaltenen flüchtigen Substanzen oder Atmosphärilien aus der Umgebung, wirksam unterbunden wird. Diese Wirkung wird noch in erheblichen Mass durch die Ausbildung nach Anspruch 7 verstärkt, durch die ausserdem ein einfacher Zusammenbau der Messonde ermöglicht wird.

Durch das Druckausgleichssystem entsprechend der Ausbildung nach Anspruch 8 wird ein rascher Abbau eines Druckgefälles zwischen dem Messmedium und dem Sondeninnenraum in beiden Richtungen ermöglicht.

Die Ausbildungen nach den Ansprüchen 9 und 10 gewährleisten einerseits eine hohe Unempfindlichkeit gegenüber dem Angriff aggressiver Chemikalien, wie sie teilweise bei der Reinigung verwendet werden, und der Einwirkung von erhöhten Temperaturen, wie sie im Verlauf der Dampfsterilisation auftreten.

Ausserdem werden Unebenheiten oder Spalten in der Oberfläche des Sondengehäuses vermieden, durch die es zu einer Verschmutzung des Sondengehäuses und zu einem Bakterienbewuchs kommen könnte.

Die Messonde der eingangs erwähnten Art kann mit besonderem Vorteil für die amperometrische Bestimmung von Sauerstoff in Gasgemischen oder Flüssigkeiten eingesetzt werden. Sie kann aber auch für die Bestimmung von Chlor oder Wasserstoff in Gasgemischen oder Flüssigkeiten verwendet werden.

Ausführungsbeispiele werden nachstehend anhand der Zeichnungen beschrieben, dabei zeigen:

Figur 1    eine Membran im Schnitt;
Figur 2    eine Messonde in geöffnetem Zustand, teilweise im Schnitt;
Figur 3    eine Aussenansicht des geschnittenen Teils der Figur 2 von vorne.

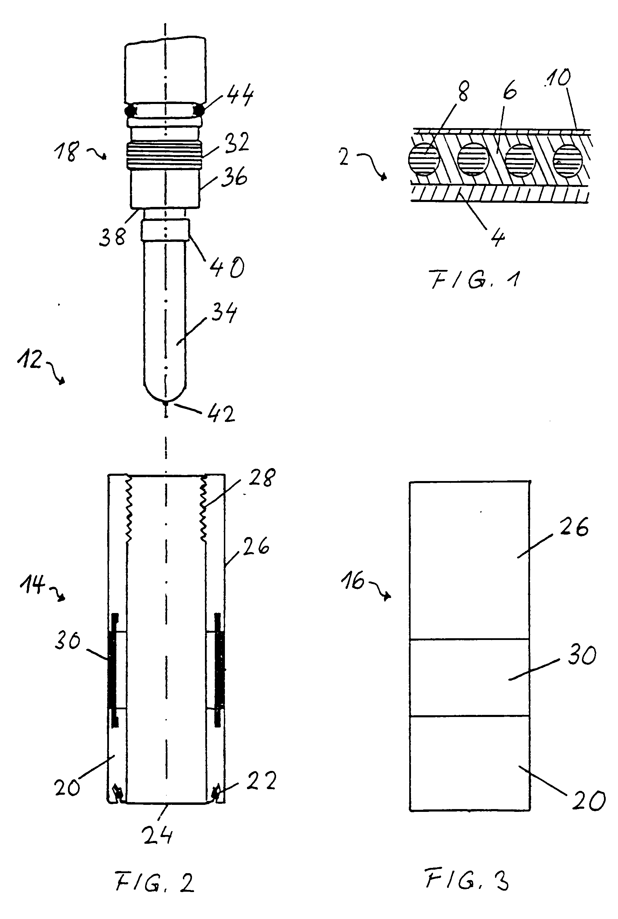

Figur 1 zeigt eine aus drei Schichten aufgebaute Membran 2, die im folgenden als Tripelmembran bezeichnet wird und die eine erste Schicht 4, eine zweite Schicht 6, in die ein Stützmaterial (8), z.B. ein Netz aus rostfreiem Stahl, integriert ist, und eine dritte Schicht 10 aufweist. Die erste Schicht, die in eingebautem Zustand dem Sondeninnenraum zugewandt ist, besteht zweckmässigerweise aus einer Folie aus einem fluorierten Polymer, vorzugsweise aus Polytetrafluorethylen (PTFE), und weist eine Dicke von maximal 0,1 mm auf. Auf der dem Sondeninnenraum abgewandten Oberfläche der ersten Schicht 4 ist die zweite Schicht 6 angeordnet, die vorzugsweise aus Silikonkautschuk gebildet ist. Die zweite Schicht 6 weist eine Permeabilität für die zu bestimmenden Gase, vorzugsweise Sauerstoff, und/oder nicht-ionischen Verbindungen auf, die um annährend zwei Zehnerpotenzen grösser ist als diejenige der ersten Schicht 4. Das in die zweite Schicht 6 als Stützmaterial 8 integrierte Netz aus rostfreiem Stahl, welches jedoch auch durch ein Netz oder Gewebe aus einem mechanisch stabilen Kunststoffmaterial ersetzt sein kann, weist in der Regel eine Dicke von 20 bis 100 μm auf. Dabei hängt die Dicke des Netzes im Einzelfall von der Schichtdicke der zweiten Schicht 6 ab, die im Bereich von 30 bis 150 μm liegt. Auf der der ersten Schicht 4 abgewandten Oberfläche der zweiten Schicht 6 ist die dritte Schicht 10 angeordnet, welche aus einer Folie aus dem gleichen fluorierten Polymer wie die erste Schicht 4 oder aus einem hinsichtlich seiner Permeabilität ähnlichen Material gebildet ist und eine Schichtdicke aufweist, die kleiner ist als diejenige der ersten Schicht 4 und in der Regel bis 30 μm beträgt. Die dritte Schicht 10 bedeckt die benachbarte zweite Schicht 6 vollständig und schützt diese im Betriebszustand wirksam gegen den Angriff von im Messmedium enthaltenen oder bei der Reinigung verwendeten aggressiven Chemikalien und ist aufgrund der hydrophoben Eigenschaften des Materials schmutzabweisend und schützt vor einem Bewuchs durch Bakterien. Die drei Schichten sind fest miteinander verbunden, so das eine einheitliche Membran 2 entsteht. Dies kann dadurch erreicht werden, dass die der zweiten Schicht 6 zugewandten Oberflächen der ersten Schicht 4 und der dritten Schicht 10 im Zuge der Herstellung der Membran 2 vor dem Zusammenfügen hydrophilisiert oder mit einem Haftvermittler beschichtet werden. Die Hydrophilisierung kann beispielsweise durch Anätzen erfolgen.

Figur 2 zeigt eine für die Bestimmung von in einem Messmedium enthaltenen Gasen und nicht-ionischen Verbindungen einsetzbare Messonde 12 mit einem Membranmodul 14, das durch ein rohrförmiges Gehäuse 16, z.B. aus rostfreiem Stahl, aufweist, und einen Elektrodenschaft 18 gebildet ist. Das Membranmodul 14 weist in einem ersten Endbereich 20 eine Halterung 22 für eine Membran 24 auf. Die Membran 24 entspricht in ihrem Aufbau der in Figur 1 dargestellten, als Tripelmembran ausgebildeten Membran 2. In einem, dem die Membran 24 tragenden Endbereich 20 entgegengesetzten, zweiten Endbereich 26 weist das Membranmodul 14 ein Innengewinde 28 auf. Ausserdem ist zwischen dem ersten Endbereich 18 und und dem zweiten Endberich 26 ein Druckausgleichssystem 30 angeordnet, das durch einen Schlauch aus hochelastischem, chemisch und thermisch resistentem Material, z.B. einem einem vulkanisierbaren Fluorelastomer gebildet und in die Wandung des Gehäuses 16 eingepasst ist. Der mit dem Membranmodul 14 verbindbare Elektrodenschaft 18, der bevorzugt aus rostfreiem Stahl besteht, weist ein Aussengewinde 32 auf, das mit dem Innengewinde 28 des Membranmoduls 14 korrespondiert und ein einfaches Aufschrauben des Membranmoduls 14 auf den Elektrodenschaft 18 gestattet. Im Elektrodenschaft 18 ist ein Innenkörper 34, vorzugsweise aus Glas, befestigt. Ausserdem weist der Elektrodenschaft 18 einen Rohrfortsatz 36 auf, welcher den Innenkörper 34 teilweise umgibt und mit diesem zusammen einen Hohlraum 38 umschliesst. Der Innenkörper 34 weist in seinem dem Rohrfortsatz benachbarten Abschnitt eine erste Elektrode 40 auf, die beispielsweise durch einen Silberring gebildet ist und als Anode dient. Der Innenkörper 34 weist ausserdem eine zweite, die Kathode bildende Elektrode 42 auf, welche in seinem dem Rohrfortsatz 36 abgewendeten Endbereich befestigt und vorzugsweise durch einen in den Innenkörper 34 eingeschmolzenen Platindraht gebildet ist. Ausserdem weist der elektrodenschaft 18 in seinem dem Aussengewinde 32 benachbarten und dem Rohrfortsatz entgegengesetzten Bereich eine O-Ringdichtung 44 zum hermetischen Abschluss des Sondeninnenraumes nach aussen auf, wenn er mit dem Membranmodul 14 verschraubt ist.

Figur 3 zeigt eine Aussenansicht des Membranmoduls 14 der Figur 2 mit dem zwischen den Endbereichen 20 und 26 des Gehäuses 16 angeordneten Druckausgleichsystem 30. Daraus ist ersichtlich, dass das Druckausgleichssystem so in die Gehäuse- wandung eingepasst ist, dass die äussere Oberfläche glatt ist und keine Unebenheiten oder Spalten aufweist, worin sich Schmutz oder Bakterien festsetzen könnten.

Beispiel

**Membran für eine Messonde zur Bestimmung von Sauerstoff**

a) **Aufbau der Membran:**

Die Tripelmembran weist die in Figur 1 dargestellte Struktur auf und ist aus den folgenden Komponenten zusammengesetzt:

Einer ersten Schicht aus PTFE mit einer Schichtdicke von 25 µm, einer zweiten Schicht aus Silikonkautschuk mit einer Schichtdicke von 120 µm, in die ein Stahlnetz mit einer Dicke von 90 µm eingebettet ist, und einer dritten Schicht aus PTFE mit einer Schichtdicke von 6 µm.

b) **Funktion der Membran**:

Die Silikonkautschukschicht ist hochpermeabel und flexibel und weist ein ausgezeichnetes Haftvermögen sowohl gegenüber den benachbarten Schichten aus angeätztem PTFE als auch gegenüber dem eingebetteten Stahlnetz auf. Auf diese Weise ist eine sichere Verbindung zwischen allen drei Schichten gewährleistet. Die im Betriebszustand der Messonde mediumseitig angeordnete PTFE-Schicht bietet einen ausgezeichneten Schutz der aus Silikonkautschuk gebildeten Schicht gegen den Angriff von heisser Lauge, wie sie beispielsweise in Brauereien zur Reinigung verwende wird, sowie gegen den Bewuchs durch Bakterien im Falle aerober Bioprozesse.

c) **Herstellung der Membran**:

Zunächst werden die beiden aus PTFE gebildeten Schichten einseitig geätzt, um sie oberflächlich zu hydrophilisieren und ihr Haftvermögen gegenüber der zwischen ihnen einzubringenden Schicht aus Silikonkautschuk zu verbessern. Auf die geätzte Oberfläche der einen Schicht aus PTFE wird das Stahlnetz aufgelegt. Dann wird eine Paste aus Silikonkautschuk aufgetragen, derart, dass das Stahlnetz vollständig bedeckt ist. Auf die aus Silikonkautschuk gebildete Schicht wird dann die zweite aus PTFE gebildete Schicht aufgelegt, derart, dass deren angeätzte Oberfläche der Schicht aus Silikonkautschuk gegenüberliegt. Die aus den genannten drei Schichten gebildete Struktur wird durch ein Kalander geführt, wodurch überschüssiger Silikonkautschuk verdrängt und der Struktur eine definierte Dicke aufgeprägt wird. Danach wird die erhaltene Membranstruktur in ein Wasserbad gelegt, um die Polykondensation des Silikonkautschuks zu bewirken. Sobald die Polykondensation vollständig zu Ende gelaufen ist, sind die drei Schichten unlösbar miteinander verbunden und bilden eine einheitliche Membran. Diese Membran wird dann im Gehäuse einer Messonde starr fixiert, derart, dass der Sondeninnenraum, welcher das in den Innenkörper integrierte sensitive Element, das im Falle der amperometrischen Bestimmung von Sauerstoff eine Edelmetallkathode ist, umgibt, im Betriebszustand der Messonde gegenüber dem Messmedium hermetisch abgeschlossen ist.

**d) Funktion der Messonde:**

Es wurden die Ansprechzeiten einer mit der oben beschriebenen Tripelmembran ausgestatteten Messonde mit denen einer mit einer Membran gemäss US-PS 3 718 562 ausgestatteten Messonde verglichen. Die letztgenannte Membran weist keine mediumseitig angeordnete Schicht aus einem chemisch resisten und schmutzabweisenden Material auf. Sie ist aus einer Schicht aus Silikonkautschuk mit einer Schichtdicke von 120 μm, in die ein Stahlnetz mit einer Dicke von 90 μm eingebettet ist, und einer an den Sondeninnenraum angrenzenden nichthaftenden Schicht aus PTFE mit einer Schichtdicke von 25 μm gebildet. Als weiterer Vergleich wurde eine Messonde mit einer sogenannten Einfachmembran, d.h. eingesetzt, bei der die Membran aus einer einzigen Schicht aus PTFE mit einer Schichtdicke von 60 μm und einem darin eingebetteten Stahlnetz mit einer Dicke von 30 μm bestand. Dabei ergaben sich die folgenden Ansprechzeiten (90%) bei 25°C:

```
a)   Tripelmembran gemäss vor-
     stehendem Beispiel              50 Sekunden

b)   Membran gemäss US-PS 3 718 562  30 Sekunden

c)   Einfachmembran                  4,6 Minuten.
```

Der Vergleich der Ansprechzeiten zeigt, dass diese bei der Tripelmembran und derjenigen gemäss US-PS 3 718 562 annähernd gleich gut sind, während die Ansprechzeit der Messonde mit einer Einfachmembran einen wesentlich höheren Wert aufweist, und zwar annähernd den 6-fachen.

Vergleicht man jedoch die Resistenz gegenüber schädlichen chemischen Einflüssen und gegenüber dem Bewuchs durch Bakterien, so zeigt sich, wie aus Vergleichsversuchen in Brauereien und anaeroben Bioprozessen hervorgeht, dass die unter a) erwähnte Tripelmembran sowohl hinsichtlich der Resistenz gegenüber chemische Einflüssen, insbesondere der Einwirkung von heisser Lauge, als auch hinsichtlich des Bakterienbewuchses der unter b) erwähnten Membran gemäss US-PS 4 718 562 signifikant überlegen ist. Die mediumseitige Oberfläche der Tripelmembran zeigte keinerlei Schädigung durch chemische Agenzien, insbesondere Laugen, und war völlig frei von Bakterienbewuchs. Eine ähnlich gute Resistenz gegenüber chemischen Agentien und dem Bewuchs durch Bakterien zeigte die unter c) erwähnte Einfachmembran; sie ist jedoch aufgrund ihrer ausserordentlich langen Ansprechzeit für einen industriellen Einsatz ungeeignet.

**BEZUGSZEICHENLISTE**

| | |
|---|---|
| 2 | Membran |
| 4 | 1. Schicht |
| 6 | 2. Schicht |
| 8 | Stützmaterial |
| 10 | 3. Schicht |
| 12 | Messonde |
| 14 | Membranmodul |
| 16 | Gehäuse |
| 18 | Elektrodenschaft |
| 20 | 1. Endbereich des Membranmoduls 14 |
| 22 | Halterung für Membran |
| 24 | Membran |
| 26 | 2. Endbereich des Membranmoduls 14 |
| 28 | Innengewinde |
| 30 | Druckausgleichsystem |
| 32 | Aussengewinde |

| 34 | Innenkörper |
| 36 | Rohrfortsatz |
| 38 | Hohlraum |
| 40 | 1. Elektrode |
| 42 | 2. Elektrode |
| 44 | O-Ringdichtung |

**Patentansprüche**

1. Messonde für die amperometrische Bestimmung von in einem Messmedium enthaltenen Gasen und/oder nicht-ionischen Verbindungen mit einem innerhalb eines durch das Sondengehäuse begrenzten Sondeninnenraumes untergebrachten Innenkörper, in den ein für die zu bestimmenden Gase und/oder nicht-ionischen Verbindungen sensitives Element integriert ist, und einer den Sondeninnenraum abschliessenden, durch ein Stützmaterial vestärkten Membran, die im Sondengehäuse fixiert ist, wobei der die Membran tragende Teil des Sondengehäuses ein Membranmodul bildet, welches mit einem, den Innenkörper tragenden Elektrodenschaft verbindbar ist, dadurch gekennzeichnet, dass die Membran (2, 24) aus mindestens drei Schichten besteht, wobei eine erste, in eingebautem Zustand dem Sondeninnenraum zugewandte Schicht (4) aus chemisch resistentem Material mit einer auf der dem Sondeninnenraum abgewandten Oberfläche der ersten Schicht (4) angeordneten zweiten Schicht (6), die eine im Vergleich zur ersten Schicht (4) stark erhöhte Permeabilität für die zu bestimmenden Gase und/oder nicht-ionischen Verbindungen aufweist, verbunden ist und auf deren, der ersten Schicht (4) gegenüberliegenden Oberfläche eine dritte Schicht (10) angeordnet ist, welche die zweite Schicht (6) vollständig bedeckt und aus einem Material gebildet ist, das demjenigen der ersten Schicht (4) hinsichtlich chemischer Resistenz und Permeabilität für die zu bestimmenden Gase und/oder nicht-ionischen Verbindungen mindestens annähernd gleichwertig ist, und dass in das Membranmodul (14) ein Druckausgleichssystem (30) integriert ist, das bei einem im Betriebszustand zwischen dem Messmedium und dem Sondeninnenraum auftretenden Druckgefälle in Richtung des Druckgefälles verformbar ist.

2. Messonde nach Anspruch 1, dadurch gekennzeichnet, dass alle drei Schichten (4, 6, 10) unlösbar miteinander verbunden sind und eine einheitliche Membran (2, 24) bilden.

3. Messonde nach Anspruch 1 oder 2, dadurch gekennzeichnet, dass die erste Schicht (4) und die dritte Schicht (10) aus einem fluorierten Polymer, vorzugsweise aus dem gleichen, gebildet sind.

4. Messonde nach einem der Ansprüche 1 bis 3, dadurch gekennzeichnet, dass die zweite Schicht (6) aus einem für die zu bestimmenden Gase und/oder nicht-ionischen Verbindungen hochpermeablen Material, vorzugsweise einem Silikonkautschuk, gebildet ist.

5. Messonde nach einem der Ansprüche 1 bis 4, dadurch gekennzeichnet, dass in die zweite Schicht ein Stützmaterial (8), vorzugsweise ein Netz aus rostfreiem Stahl, eingebettet ist.

6. Messonde nach einem der Ansprüche 1 bis 5, dadurch gekennzeichnet, dass die Membran (2, 24) in einem ersten Endbereich (20) des Membranmoduls (14) starr fixiert und derart abgedichtet ist, dass der Austausch der zu bestimmenden Gase und/oder nicht-ionischen Verbindungen zwischen dem Messmedium und dem Sondeninnenraum im Betriebszustand nur über die Membran (2, 24) erfolgen kann.

7. Messonde nach einem der Ansprüche 1 bis 6, dadurch gekennzeichnet, dass in dem der Membran (2, 24) abgewandten zweiten Endbereich (26) des Membranmoduls (14) ein Innengewinde (28) vorgesehen ist, welches mit einem Aussengewinde (32), das an einem den Innenkörper tragenden Elektrodenschaft (18) angeordnet ist, korrespondiert und ein Verschrauben des Membranmoduls (14) mit dem Elektrodenschaft (18) gestattet.

8. Messonde nach einem der Ansprüche 1 bis 7, dadurch gekennzeichnet, dass das Druckausgleichssystem (30) zwischen dem, die Membran (2, 24) tragenden ersten Endbereich (20) und dem mit dem Innengewinde (22) versehenen zweiten Endbereich (26) des Membranmoduls (14) angeordnet ist.

9. Messonde nach Anspruch 7, dadurch gekennzeichnet, dass das Druckausgleichssystem (30) aus einem biologisch und/oder chemisch inerten und thermisch resistenten hochelastischen Material, vorzugsweise einem vulkanisierbaren Fluorelastomer, gebildet ist.

**10.** Messonde nach Anspruch 7 oder 8, dadurch gekennzeichnet, dass das Druckausgleichssystem (30) als Schlauch ausgebildet ist, der so in die Wandung des Membranmoduls (14) eingepasst ist, dass die äussere Oberfläche des Membranmoduls (14) frei von Unebenheiten und/oder Spalten ist.

**11.** Verwendung der Messonde nach einem der Ansprüche 1 bis 10 zur amperometrischen Bestimmung von Sauerstoff in Gasgemischen oder Flüssigkeiten.

**12.** Verwendung der Messonde nach einem der Ansprüche 1 bis 10 zur amperometrischen Bestimmung von Chlor oder Wasserstoff in Gasgemischen oder Flüssigkeiten.

## Claims

**1.** A measurement probe for the amperometric determination of gases and/or non-ionic compounds contained in a measurement medium, having an inner body which is disposed within a probe interior defined by the probe housing and into which is integrated an element which is sensitive to the gases and/or non-ionic compounds to be determined, and a membrane which closes off the interior of the probe and which is reinforced by a support material and which is fixed in the probe housing, wherein the part of the probe housing which carries the membrane forms a membrane module which can be connected to an electrode shaft carrying the inner body, characterised in that the membrane (2, 24) comprises at least three layers, wherein a first layer (4) of chemically resistant material, which in the installed condition is towards the interior of the probe, is joined to a second layer (6) arranged on the surface of the first layer (4), which is remote from the interior of the probe, the second layer having a level of permeability for the gases and/or non-ionic compounds to be determined that is greatly increased in comparison with the first layer (4), a third layer (10) being arranged on the surface of the second layer (6), which is opposite the first layer (4), the third layer completely covering the second layer and being formed from a material which is at least approximately equivalent to that of the first layer (4) in respect of chemical resistance and permeability for the gases and/or non-ionic compounds to be determined, and that integrated into the membrane module (14) is a pressure compensation system (30) which, in the case of a pressure drop occurring in the operative condition between the measurement medium and the interior of the probe, is deformable in the direction of the pressure drop.

**2.** A measurement probe according to claim 1 characterised in that all three layers (4, 6, 10) are inseparably connected together and form a unitary membrane (2, 24).

**3.** A measurement probe according to claim 1 or claim 2 characterised in that the first layer (4) and the third layer (10) are formed from a fluorinated polymer, preferably the same one.

**4.** A measurement probe according to one of claims 1 to 3 characterised in that the second layer (6) is formed from a material which is highly permeable for the gases and/or non-ionic compounds to be determined, preferably a silicone rubber.

**5.** A measurement probe according to one of claims 1 to 4 characterised in that a support material (8), preferably a mesh of stainless steel, is embedded in the second layer.

**6.** A measurement probe according to one of claims 1 to 5 characterised in that the membrane (2, 24) is rigidly fixed in a first end region (20) of the membrane module (14) and is sealed off in such a way that exchange of the gases and/or non-ionic compounds to be determined between the measurement medium and the interior of the probe can take place in the operative condition only by way of the membrane (2, 24).

**7.** A measurement probe according to one of claims 1 to 6 characterised in that provided in the second end region (26) of the membrane module (14), that is remote from the membrane (2, 24), is an internal screwthread (28) which corresponds to an external screwthread (32) disposed on an electrode shaft (18) carrying the inner body, and permits the membrane module (14) to be screwed to the electrode shaft (18).

**8.** A measurement probe according to one of claims 1 to 7 characterised in that the pressure compensation system (30) is arranged between the first end region (20) of the membrane module (14), that carries the membrane (2, 24), and the second end region (26) of the membrane module (14), that is provided with the internal screwthread (28).

9. A measurement probe according to claim 7 characterised in that the pressure compensation system (30) is formed from a biologically and/or chemically inert and heat-resistant highly elastic material, preferably a vulcanisable fluorine elastomer.

10. A measurement probe according to claim 7 or claim 8 characterised in that the pressure compensation system (30) is in the form of a hose which is fitted into the wall of the membrane module (14) in such a way that the outside surface of the membrane module (14) is free from unevenness and/or gaps.

11. Use of the measurement probe according to one of claims 1 to 10 for the amperometric determination of oxygen in gas mixtures or liquids.

12. Use of the measurement probe according to one of claims 1 to 10 for the amperometric determination of chlorine or hydrogen in gas mixtures or liquids.


**Revendications**

1. Sonde de mesure pour la détermination ampérométrique de gaz et/ou de composés non ioniques contenus dans un milieu à mesurer, ladite sonde de mesure comprenant un corps intérieur qui est logé dans une cavité intérieure de sonde limitée par le boîtier de la sonde et dans lequel est intégré un élément sensible aux gaz et/ou aux composés non ioniques à déterminer, et comprenant une membrane qui ferme la cavité intérieure de la sonde, qui est renforcée par un matériau porteur et qui est fixée dans le boîtier de la sonde, la partie du boîtier de sonde portant la membrane formant un module à membrane qui peut être relié à une tige formant électrode qui porte le corps intérieur, caractérisée en ce que la membrane (2, 24) est constituée d'au moins trois couches, une première couche (4) tournée vers la cavité intérieure de la sonde en position assemblée et réalisée en matériau résistant étant reliée à une deuxième couche (6) qui est disposée sur la surface de la première couche (4) opposée à la cavité intérieure de la sonde, qui présente, par rapport à la première couche (4), une bien meilleure perméabilité aux gaz et/ou composés non ioniques à déterminer, et sur la surface de laquelle, ladite surface étant située en face de la première couche (4), est disposée une troisième couche (10) qui recouvre complètement la deuxième couche (6) et qui est formée dans un matériau au moins sensiblement de même valeur que celui de la première couche (4) sur le plan de la résistance chimique et de la perméabilité aux gaz et/ou aux composés non ioniques à déterminer, et en ce que, dans le module à membrane (14), est intégré un système de compensation de pression (30) qui, en présence d'un différentiel de pression survenant lors du fonctionnement entre le milieu à mesurer et la cavité intérieure de la sonde, peut se déformer dans le sens du différentiel de pression.

2. Sonde de mesure selon la revendication 1, caractérisée en ce que les couches (4, 6, 10) sont toutes trois reliées entre elles de manière indissociable et forment une membrane unique (2, 24).

3. Sonde de mesure selon la revendication 1 ou 2, caractérisée en ce que la première couche (4) et la troisième couche (10) sont réalisées dans un polymère fluoré, de préférence dans le même.

4. Sonde de mesure selon l'une des revendications 1 à 3, caractérisée en ce que la deuxième couche (6) est réalisée dans un matériau très perméable aux gaz et/ou aux composés non ioniques à déterminer, de préférence dans un caoutchouc au silicone.

5. Sonde de mesure selon l'une des revendications 1 à 4, caractérisée en ce que, dans la deuxième couche, est noyé un matériau porteur (8), de préférence un treillis en acier inoxydable.

6. Sonde de mesure selon l'une des revendications 1 à 5, caractérisée en ce que la membrane (2, 24) est fixée de manière rigide dans une première zone d'extrémité (20) du module à membrane (14) et étanchée de façon que, lors du fonctionnement, l'échange des gaz et/ou composés non ioniques à déterminer entre le milieu à mesurer et la cavité intérieure de la sonde ne puisse s'effectuer qu'à travers la membrane (2, 24).

7. Sonde de mesure selon l'une des revendications 1 à 6, caractérisée en ce qu'il est prévu, dans la seconde zone d'extrémité (26) du module à membrane (14) opposée à la membrane (2, 24), un taraudage (28) qui correspond au filet extérieur (32) réalisé dans une tige formant électrode (18) portant le corps intérieur et qui permet de visser le module à membrane (14) avec la tige formant électrode (18).

8. Sonde de mesure selon l'une des revendications 1 à 7, caractérisée en ce que le système de compensation de pression (30) est disposé entre la première zone d'extrémité (20) portant la membrane (2, 24) et la seconde zone d'extrémité (26) du module à membrane (14) pourvue du taraudage (22).

9. Sonde de mesure selon la revendication 7, caractérisée en ce que le système de compensation de pression (30) est réalisé dans un matériau très élastique, biologiquement et/ou chimiquement inerte et thermiquement résistant, de préférence dans un fluorélastomère vulcanisable.

10. Sonde de mesure selon la revendication 7 ou 8, caractérisée en ce que le système de compensation de pression (30) est conçu sous la forme d'un tuyau souple qui est inséré dans la paroi du module à membrane (14), de façon que la surface extérieure du module à membrane (14) soit exempte d'aspérités et/ou d'interstices.

11. Emploi de la sonde de mesure conforme à l'une des revendications 1 à 10 pour la détermination ampérométrique d'oxygène dans des mélanges gazeux ou dans des liquides.

12. Emploi de la sonde de mesure conforme à l'une des revendications 1 à 10 pour la détermination ampérométrique de chlore ou d'hydrogène dans des mélanges gazeux ou dans des liquides.

FIG. 1

FIG. 2

FIG. 3